# EUROPEAN PATENT SPECIFICATION

(11) **EP 2 294 793 B1**
(45) Date of publication and mention of the grant of the patent: **25.04.2012**
(21) Application number: 09767526.8
(22) Date of filing: 12.06.2009
(51) Int. Cl.: H04L 29/08, H04L 29/12, G06F 17/30

(54) **USER INTERFACES FOR SERVICE OBJECT LOCATED IN A DISTRIBUTED SYSTEM**
BENUTZEROBERFLÄCHEN FÜR EIN IN EINEM VERTEILTEN SYSTEM ANGEORDNETES DIENSTOBJEKT
INTERFACE UTILISATEUR POUR OBJET DE SERVICE SITUÉ DANS UN SYSTÈME DISTRIBUÉ

(30) Priority: 18.06.2008 US 141478
(43) Date of publication of application: 16.03.2011
(60) Divisional application: 12156037.9
(73) Proprietor: QUALCOMM Incorporated, San Diego, CA 92121 (US)
(72) Inventor: JACKSON, Bruce, Kelly, San Diego CA 92121 (US); CAUNTER, Mark, Leslie, San Diego CA 92121 (US); GEACH, Steven, San Diego CA 92121 (US)
(74) Representative: Cupitt, Philip Leslie
(86) International application number: PCT/US2009/047222
(87) International publication number: WO 2009/155216

(56) References cited:
- LEHMAN T J ET AL: "Hitting the distributed computing sweet spot with TSpaces" COMPUTER NETWORKS, ELSEVIER SCIENCE PUBLISHERS B.V., AMSTERDAM, NL, vol. 35, no. 4, 1 March 2001 (2001-03-01), pages 457-472, XP004304859 ISSN: 1389-1286
- WYCKOFF P ET AL: "T SPACES" IBM SYSTEMS JOURNAL, IBM CORP. ARMONK, NEW YORK, US, vol. 37, no. 3, 1 January 1998 (1998-01-01), pages 454-474, XP000783107 ISSN: 0018-8670
- RAVERDY P ET AL: "Efficient Context-aware Service Discovery in Multi-Protocol Pervasive Environments" MOBILE DATA MANAGEMENT, 2006. MDM 2006. 7TH INTERNATIONAL CONFERENCE O N NARA, JAPAN 10-12 MAY 2006, PISCATAWAY, NJ, USA,IEEE, 10 May 2006 (2006-05-10), pages 3-3, XP010917860
- KEITH EDWARDS: "Core Jini" CORE JINI, PRENTICE HALL PTR, INDIANAPOLIS, US, 1 June 1999 (1999-06-01) , XP002178476

## Description

### BACKGROUND

### Field

The described aspects relate to interactive workspaces and ubiquitous computing. More particularly, it pertains to an infrastructure for a population of disparate computing platforms to readily interface to a service object located in a distributed system.

### Background

A distributed computer system, such as but not limited to the Internet, is characterized by rapid, real-time interchange among many dissimilar processes executing simultaneously on a large array of dissimilar and geographically diverse processors. A distributed computer system's resources are usually spatially separated, and the execution of its applications often involves multiple execution threads that can be widely separated in time.

Operators for a population of users of client devices compete in a competitive, evolving communication marketplace. It is difficult to satisfy user expectations for various services, especially over distributed computer systems. Often, user expectations are at variance with each other in having different preferred service providers, such as searching. In addition, certain types of content can be segregated in different nodes of a distributed network with proprietary interfaces that frustrate accessing these services.

Client devices are increasingly mobile with communication capabilities as their principal purpose or having wireless communication capabilities to extend connectivity. End users desire to access services with these mobile communication devices that were previously the domain of terminals, work stations, and general purpose computers. The latter devices intended for general purpose computing have had a tendency toward standardization, or at least to accommodate a wide range of usage environments. By contrast, mobile communication devices are progressed with a priority toward economic manufacture, small size and extended battery service life with performance focused on wireless communication rather than processing capabilities. Furthermore, the evolution of broadcast bands and protocols has tended to encourage a proliferation in communication chipsets. As such, offering of various services to users of mobile communication devices has been limited, especially as compared to the larger current market for users of general purpose computers.

A number of obstacles discourage addressing the challenges of deploying services to mobile communication devices as is conventional for a general purpose computer. The communication bandwidth to mobile communication devices is often constrained as compared to broadband channels to general purpose computers, discouraging downloading of interfacing software to properly configure the mobile communication device for various services. Often the user interface of the mobile communication device is severely constrained in size, limiting display size and the number of control buttons that can be presented, further complicating such configuring. Moreover, many users tend to make use of mobile communication devices in situations (e.g., traveling) that do not lend themselves to such focused interaction.

Lehman, T. J., et al., "Hitting the distributed computing sweet spot with TSpaces" (Computer Network 35 (2001) 457-472) describes an application distribution and monitoring system based on a proprietary implementation of a tuple space, known as "TSpaces". A client is installed on client machines, and connects to a TSpaces server to download a list of available applications. On a user's request, the launcher downloads the classes that compose a Java application and runs the application. The applications are stored on the TSpaces server, where each class file is stored in a different tuple. The client can be used in "developer" mode to have access to all of the latest releases of each class, no matter how unstable they are. Normal users only see a new release of an application after all of its classes have been marked as "stable". Further information on TSpaces is provided by Wycoff, P. et al., "T Spaces" (IBM Systems Journal, Vol. 37, No. 3, 1998, pages 434-474).

### SUMMARY

The following presents a simplified summary in order to provide a basic understanding of some aspects of the present disclosure. This summary is not an extensive overview and is intended to neither identify key or critical elements nor delineate the scope of such aspects. Its purpose is to present some concepts of the described aspects in a simplified form as a prelude to the more detailed description that is presented later.

In accordance with the invention, there is provided: a method of providing services to a population of client devices in accordance with claim 1; a method of accessing services on a distributed network via a client device in accordance with claim 7; a computer program product in accordance with claim 13; and an apparatus in accordance with claim 14.

In accordance with one or more aspects and corresponding disclosure thereof, various features are described in connection with use of a client device, such as a mobile communication device, for accessing services via a loosely coupled, distributed network.

In one aspect, a method provides services to a population of client devices by receiving a data tuple within a tuple space. The data tuple comprises data attributes representing a predetermined configuration of the client device and a service request attribute for locating a service. A service tuple located within the tuple space monitors for the data tuple. The service tuple comprises a plurality of client device configuration attributes and a service request attribute. In order for the client device to access the service associated with the service tuple, a service interface object is provided from the service object to the data tuple for execution on the client device.

In other aspects, at least one processor includes modules for performing the service providing method A computer program product includes sets of instructions for performing the service providing method. An apparatus provides means for performing the service providing method.

In another aspect, an apparatus provides services to a population of client devices with a tuple space that receives a data tuple for locating a service. The data tuple comprises data attributes representing a predetermined configuration of the client device and a service request attribute. A service tuple monitors the data tuple located within the tuple space. The service tuple comprises a plurality of client device configuration attributes and a service request attribute. A service interface object is provided from the tuple space to the data tuple for execution on the client device to access a service associated with the service tuple.

The service tuple preferably causes performance of the requested service and creation and storage within the tuple space of a service result tuple formatted in accordance with the service interface object. The tuple space preferably receives the data tuple from the client device comprises via a cellular telephone network. The tuple space preferably registers the client device to access the tuple space. The service tuple preferably performs the requested service associated with the service request attribute by performing a search. The tuple space preferably receives the service interface object in tuple space that is executable by the client device within a virtual machine.

In yet an additional aspect, a method of accessing services on a distributed network via a client device includes sending a data tuple to a tuple space to locate a service. The data tuple comprises data attributes representing a predetermined configuration of the client device and a service request attribute. The tuple space is monitored by a service tuple that comprises a plurality of client device configuration attributes and a service request attribute. A service interface object from the service object is received via the data tuple for execution on the client device to access a service associated with the service tuple.

In other aspects, at least one processor includes modules for performing the method of accessing services. A computer program product includes sets of instructions for performing the method of accessing services. An apparatus provides means for performing the method of accessing services.

In yet a further aspect, an apparatus accesses services on a distributed network via a client device. A communication component sends a data tuple that comprises data attributes representing a predetermined configuration of the client device and a service request attribute. The data tuple is received by a tuple space containing a service tuple comprising a plurality of client device configuration attributes and a service request attribute for monitoring for the data tuple. A user interface receives a service interface object from the tuple space to the data tuple for execution on the client device to access a service associated with the service tuple.

The communication component preferably sends the data tuple for causing the service tuple to perform the requested service and to create and store within the tuple space a service result tuple formatted in accordance with the service interface object. The tuple space preferably receives the data tuple from the client device comprises via a cellular telephone network. The tuple space preferably registers the client device to access the tuple space. The service tuple preferably performs the requested service associated with the service request attribute by performing a search. The user interface preferably executes the service interface object within a virtual machine.

To the accomplishment of the foregoing and related ends, one or more aspects comprise the features hereinafter fully described and particularly pointed out in the claims. The following description and the annexed drawings set forth in detail certain illustrative aspects and are indicative of but a few of the various ways in which the principles of the aspects and versions may be employed. Other advantages and novel features will become apparent from the following detailed description when considered in conjunction with the drawings and the disclosed versions are intended to include all such aspects and their equivalents.

### BRIEF DESCRIPTION OF THE DRAWINGS

FIG. 1 is a schematic diagram of one aspect of a system for interfacing to distributed network services;

FIG. 2 is a schematic diagram of one aspect of a data tuple of FIG. 1;

FIG. 3 is a schematic diagram of one aspect of an interfacing, search service tuple of FIG. 1;

FIG. 4 is a schematic diagram of one aspect of a rating service tuple of FIG. 1; and

FIG. 5 is a schematic diagram of one aspect of a communication network operable with the system of FIG. 1.

FIG. 6 is a diagram of an illustrative client device having an optimized rated search results displaced, according to one aspect.

FIG. 7 is a flow diagram of a methodology for managing user communities, according to yet another aspect.

### DETAILED DESCRIPTION

A service object user interface responds to a number of different types of client devices, especially handheld communication devices, by providing tuple space interface attributes in a service tuple. Thereby, dynamically changing services (e.g., search engines, online shopping, media content selection, etc.) and a population of client devices can be accommodated even within a loosely coupled, distributed system. By facilitating interfacing within tuple space, inconvenient configuring at the client device is avoided, expanding computer platform independence to encompass alternative user interfaces based upon Java^{™} classes, uiOne^{™} trigs, Flash^{™} multimedia, and/or other evolving protocols.

As used in this application, the terms "component," "module," "system," and the like are intended to refer to a computer-related entity, either hardware, a combination of hardware and software, software, or software in execution. For example, a component may be, but is not limited to being, a process running on a processor, a processor, an object, an executable, a thread of execution, a program, and/or a computer. By way of illustration, both an application running on a server and the server can be a component. One or more components may reside within a process and/or thread of execution and a component may be localized on one computer and/or distributed between two or more computers.

The word "exemplary" is used herein to mean serving as an example, instance, or illustration. Any aspect or design described herein as "exemplary" is not necessarily to be construed as preferred or advantageous over other aspects or designs.

Furthermore, the one or more aspects may be implemented as a method, apparatus, or article of manufacture using standard programming and/or engineering techniques to produce software, firmware, hardware, or any combination thereof to control a computer to implement the disclosed aspects. The term "article of manufacture" (or alternatively, "computer program product") as used herein is intended to encompass a computer program accessible from any computer-readable device, carrier, or media. For example, computer readable media can include but are not limited to magnetic storage devices (e.g., hard disk, floppy disk, magnetic strips, etc.,), optical disks (e.g., compact disk (CD), digital versatile disk (DVD), etc.), smart cards, and flash memory devices (e.g., card, stick, etc.). Additionally it should be appreciated that a carrier wave can be employed to carry computer-readable electronic data such as those used in transmitting and receiving electronic mail or in accessing a network such as the Internet or a local area network (LAN). Of course, those skilled in the art will recognize many modifications may be made to this configuration without departing from the scope of the disclosed aspects.

Various aspects will be presented in terms of systems that may include a number of components, modules, and the like. It is to be understood and appreciated that the various systems may include additional components, modules, etc. and/or may not include all of the components, modules, etc. discussed in connection with the figures. A combination of these approaches may also be used. The various aspects disclosed herein can be performed on electrical devices including devices that utilize touch screen display technologies and/or mouse-and-keyboard type interfaces. Examples of such devices include computers (desktop and mobile), smart phones, personal digital assistants (PDAs), and other electronic devices both wired and wireless.

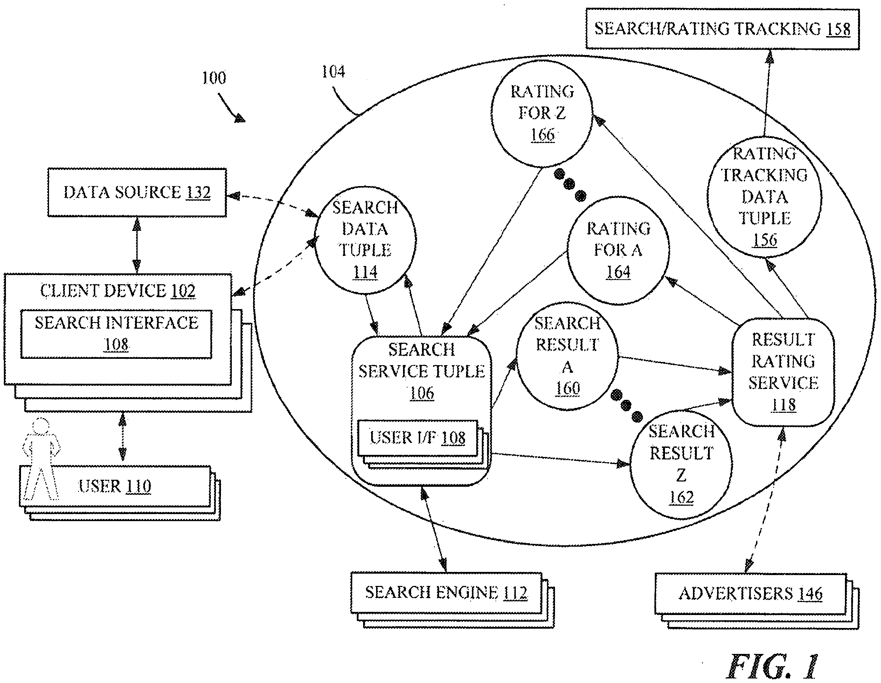

In FIG. 1, a distributed system 100 allows client devices 102, such as mobile communication devices, to examine a tuple space 104 to find services, depicted as a search service tuple 106. An appropriate user interface code (attributes) 108 from the search service tuple 106 can then be loaded and executed as a search interface 108 on the client device 102 in the illustrative depiction. Thereby, a user 110 of the client device 102 can interact with a service, depicted as search engine(s) 112, via the service tuple 106 without a required prior knowledge of what the service (e.g., search engine(s), etc.) 112 does or how it functions.

With reference to FIGS. 1-4, "tuple space" is a globally shared, associatively addressed memory space that is organized as a grouping of tuples. A "tuple" is the basic element of a tuple space system. In the context of a tuple space based coordination language like Linda, a tuple is a vector having fields or values of certain types. In a broader sense, a "tuple" is an entry in an information storage system. For example, a row in a relational database system can be referred to as a tuple.

In Linda-like languages, constructs called "templates" are used to associatively address tuples via matching techniques. A template matches a tuple if they have an equal number of fields and if each template field matches the corresponding tuple field.

Tuple space based coordination languages provide a simple yet powerful mechanism for inter-process communication and synchronization, which is the crux of parallel and distributed programming. A process with data to share generates a tuple and places it into the tuple space. A process requiring data simply requests a tuple from the tuple space. Tuple space programs may be easier to write and maintain for a number of reasons including the following:
(1) Destination uncoupling (fully anonymous communication)--the creator of a tuple requires no knowledge about the future use of that tuple or its destination.
(2) Spatial uncoupling--because tuples are retrieved using an associative addressing scheme, multiple address-space-disjoint processes can access tuples in the same way.
(3) Temporal uncoupling--tuples have their own life span, independent of the processes that generated them or any processes that may read them. This enables time-disjoint processes to communicate seamlessly.

The implementation of the tuple space can be either "closed" or "open." The closed implementations use compile time analysis of object and source code to provide highly efficient closed programs. The open implementations allow processes, agents, and programs to coordinate through tuple spaces without the run-time system requiring any prior knowledge. Essentially, the open implementations provide a persistent data store.

The Linda language uses three standard instructions or primitives. These are (with their informal semantics):
(1) out(tuple) Insert a tuple into a tuple space.
(2) in(template) If a tuple exists that matches the template, then remove the tuple and return it to the agent performing the in. If no matching tuple is available, then the primitive blocks until a matching tuple is available.
(3) rd(template) If a tuple exists that matches the template, then return a copy of the tuple to the agent that performed the rd. If there is no matching tuple, then the primitive blocks until a matching tuple is available.

Tuple space 104 comprises a data repository, and each of service tuple 106, a search data tuple 114 placed in tuple space 104 by the client device 102, and a result rating service tuple 118 comprises an object having an ordered set of data comprising a tuple type 120 and tuple attributes 122. Further, tuple attributes 122 may vary depending upon tuple type 120. The tuple space 104 comprises an abstract space operable to receive data objects, e.g. tuple 114, and includes a predetermined set of operations that can be performed within the space. For example, the predetermined set of functions may include an "in" function and a "rd" function, which both take input parameters that allow the selection of specific tuples in the space by matching the input parameters, where given, with those values present within the tuple space. Additionally, both the "in" and "rd" functions may have non-blocking equivalents (inp and rdp). In some aspects, the predetermined set of functions may include a set of operations, such as JAVA methods, that may be performed on both tuple space 104 and tuple 114.

Further, in a specific example, each tuple 114 is an instance of a com.qualcomm.qspaces.linda. Tuple class or subclass, and is created with a set of attributes 122, defined by an array of objects which are specified when the tuple is constructed. The array can be zero-length, however, in some aspects, the array may not be null. In addition, in some aspects, none of the individual attribute objects in the array may be null.

In some aspects, when the tuple 114 is first constructed, and every time the respective attributes 122 are retrieved from the respective tuple, the array of objects may be defensively copied using a very fast form of in-memory serialization. This process allows the tuple 114 to be immutable, and therefore, guarantees the integrity of tuple space 104 in which the tuple 114 resides.

In the above-noted aspects, tuple equality adheres to the same equality principles of any JAVA object, including the symmetry rule which states that if t1.equals(t2 then t2.equals(tl).

Specifically, a tuple equals another tuple, e.g. t1.equals(t2) if t2, known as a template, meets the following criteria:
1) The class 120 of the template t2 is the same class 120 as the tuple t1.
2) The attributes 122 of the template t2 are equal to the attributes 122 of the tuple t1, meaning that t2's attributes 122 are the same as t1's attributes 122, irrespective of their order.

In other aspects, a tuple matches another tuple, e.g. t1.matches(t2), if t2, known as a template, meets the following criteria:
1) The class 120 of the template t2 is the same class 120 or a super class of the tuple t1.
2) The attributes 122 of the template t2 match the attributes 122 of the tuple t1, meaning that t2's attributes 122 are the same set or a subset of t1's attributes 122, irrespective of their order.

When matching one tuple with another, the symmetry rule does not apply; so, t1.matches(t2) does not necessarily equate to t2.matches(t1).

In some aspects, the comparison of one set of tuple attributes 122 with another uses the normal object equality rules, so any object used as a tuple attribute 122 can implement the object.equals(Object obj) and object.hashcode() methods.

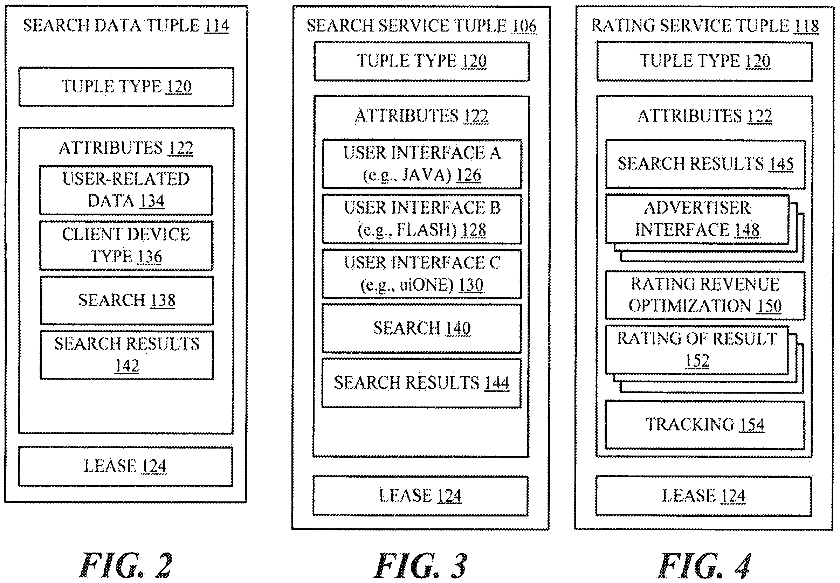

A tuple 114 is added to tuple space 104 with a lease 124 (Figs. 2-4). Lease 124 is a period of time, for example specified in milliseconds, which defines how long the tuple will remain in the respective tuple space 104. For example, lease 124 having a value of zero may indicate that the respective tuple never expires. Once lease 124 has expired for a respective tuple, the tuple is automatically removed from tuple space 104.

Service tuples 106 represent services that interact with by clients of the tuple space 104, such as client devices 102. Further, service tuples 106 are also autonomous "live" JAVA objects in their own right, which may also interact with tuple space 104 and other tuples in the space. Service tuples 106 may be discovered in the same manner as other tuples, e.g. by matching the class 120 and attributes 122 of the tuple. In some aspects, service tuples 106 may not be used in this way, however, rather service tuples 106 are interacted with indirectly by placing other tuples, such as data tuples 114, into tuple space 104.

For example, a client, such as a respective client device 102, may create data tuple 114 of class A with attributes "abc" and "123," and places the tuple into tuple space 104. As such, data tuple 114 can be described using the following notation:
(A, "abc", 123).

Service tuple 106 is a live object which can interact with tuple space 104 in the same way as a client application. As such, in this example, service tuple 106 has been instantiated and is blocking on a read from tuple space 104 for any tuples with a matching template 44 for class A and any attributes. Such a matching criterion can be described as follows:
(A, ?s, ?x)
where *?s* and *?x* mean that any values of the string *s* and the integer *x* will be matched. Consequently, tuple space 104 matches the template from service tuple 106, and will then read tuple A from tuple space 104. In this manner, the described aspects pass parameters in the form of tuples to a service.

Further, in system 100, it is possible to embed objects that represent user interfaces into the service objects themselves. Indeed, In FIG. 3, several user interface objects of different types may be placed into a single service object.

Consider the following user interface service tuple:
(A, [Java], [Flash], [uiOne])
The search service tuple 106 contains three user interface objects, depicted as user interface A attribute 126 (e.g., defined in JAVA^{™}), a user interface B attribute 128 (e.g., defined in ADOBEFLASH) and a user interface C 130 (e.g., defined in uiOne^{™} technologies developed by QUALCOMM Incorporated of San Diego, California). In the context of mobility, the present aspects enable the offering of a service across a wide variety of wireless devices, each with its own specific requirements, whether in terms of support of different technologies such as Java, Flash or uiOne, or even multiple variants of a single technology, optionally including optimizations for screen size or other device-specific properties. A respective client device (and corresponding application) 102 and/or any other party to system 100, is thus able to locate a user interface service object and then load user interface components from it.

Referring back to FIG. 1, data tuple 114 may be placed into tuple space 104 either directly by a respective client device 102, such as a wireless device, or alternately by a data source 132, such as a service with which client device interacts, or a service connected to the service interacting with client device 102. For example, client device 102 may be any type of computerized wireless device, such as a cellular telephone, a satellite telephone, a PDA, a laptop computer, etc. Further, data source 132 may comprise a transactional service, such as an Internet- or web-based commercial establishment operable to sell goods and/or services. As such, data tuples 114 may represent such transactions between one or more client devices 102 and one or more transactional services. In this manner, data tuples 114 may be placed into tuple space 104 from a wide variety of data sources 132, such as from typically non-related services in a distributed, loosely coupled network.

With further reference to FIGS. 2-3, the search data tuple 114 can include attributes such as user-related data 134 that is used by service tuple 106 to determine authorization or privileges to perform certain services. A client device type attribute 136 can match with interface components, such as user interface C 130. A search attribute 138 is provided to match with a search attribute 140 of the search service tuple 106 and a search results attribute 142 of the data tuple 114 matches with search results attribute 144 of the service tuple 106 when completed.

In FIG. 4, the rating service tuple 118 advantageously supports rating and/or ranking by including a search results attribute 145 to receive search results from the search service tuple 106. The rating service tuple 118 puts out the results for bidding by various advertisers 146 (FIG. 1) that are linked by advertising interface(s) attributes 148 to their respective tuples (not shown) in tuple space 104. A rating revenue optimization object 150 optimizes the received bids to generate a rating of result attribute 152.

Returning to FIG. 1, usage by the user and/or accepted bids from advertisers 146 can be reflected in a tracking attribute 154 (FIG. 4) that matches to a rating tracking data tuple 156 placed in tuple space 104 by a search/rating tracking entity 158.

Thus, in addition to providing an interface to rating service 118, in an illustrative example this rating service 118 comprises an Internet product recommendation service. The search service 106 is constructed to match and read search type tuples 114 placed into the space 104. The rating service 118 is constructed to match and read search result type tuples, depicted as search result A tuple 160 and search result Z tuple 162. Finally, the client matches and reads tuples of type rating, depicted as rating-for-A tuple 164 and rating-for-Z tuple 166 from the space 104.

For instance, a client places a tuple 114 of type search into the space 104 with attributes "shoes" and "black." This tuple is 114 matched by the search service 106, which then takes the attributes and passes them to the Internet search engine 112. The search engine 112 returns results that match these criteria, that is, black shoes. The search service then constructs this result set into a series of search result tuples 160, 162, and places these tuples 160, 162 into the space 104.

Since the goods rating service 118 is matching tuples 160, 162 of type search results, these are read from the space by the goods rating service 118, which then passes these to the Internet recommendation service ("advertisers") 146. Finally, the result rating service 118 (recommendation service) takes the result set returned, constructs rating tuples 164, 166, and places these into the space 104. These are matched and returned by the client. Thus, from an initial set of criteria ("black shoes"), it is possible to generate a set of search result that is rated by connecting separate services through the tuple space 104.

Thereby, a use of a tuple space leverages service tuples and tuple matching in order in part to provide: (1) multiple services chained together, each of which is unaware of other members of the chain; and (2) services that provide multiple user interfaces across a spectrum of technologies. With regard to the first point, user privacy can be preserved by the search service tuple 106 interfacing the client anonymously with a myriad of services to avoid unwanted direct follow-up. It should further be appreciated that in one aspect a system 100 may be implemented in a communications network that includes a cellular phone network.

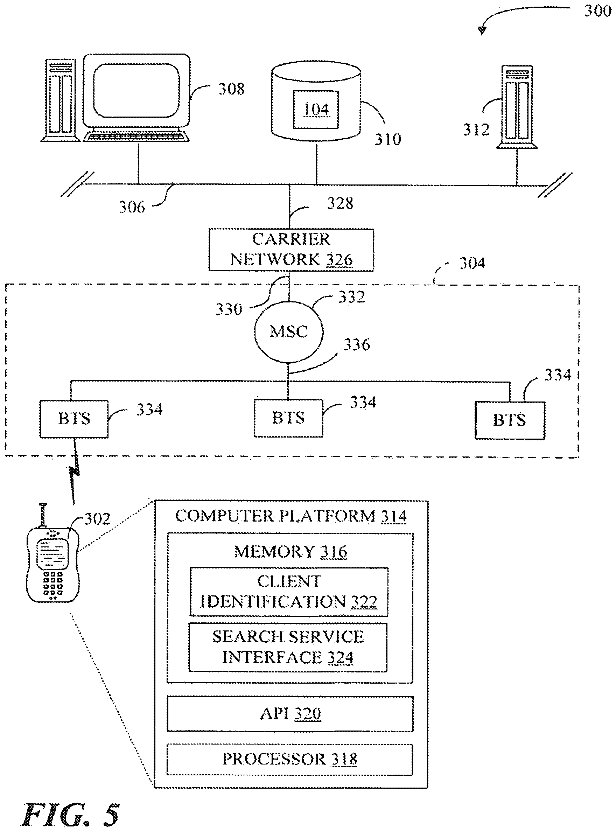

Referring to FIG. 5, for example, a communications network 300 includes one or a plurality of client devices 302, wireless telephone devices in this case, that utilizes a wireless network 304 to communicate with wired network 306 (e.g. a local area network, LAN) having network device or server 308 and/or storage device 310 and/or data source 312. One or both of network device/server 308 and/or storage device 310 may include tuple space 104 and some portions the above-discussed components of system 100. Further data source 312 may include a processor and a memory in communication with the processor, wherein the memory comprises a tuple generation module having tuple generation logic operable to generate a plurality of data tuples from any source of data operable to readily interface with unknown services, such as a web-based transactional service. In particular, wireless device 102 includes a computer platform 314 having a memory 316 in communication with a processor 318, such as via an application programming interface (API) 320 that enables interaction with any resident applications, such as client identification component 322 and a search service interface 324 that is located in tuple space 104.

Further, network device or server 308 and/or storage device 310 and/or data source 312 may include a processor and a memory in communication with the processor, as well as an interfacing, search and rating module (not depicted) stored in the memory and executable by the processor, wherein the interface, search and rating module comprises tuple space 104, search service tuple 106, and rating service tuple 118, described above. Wireless network 304 is connected to wired network 306 via a carrier network 326. Network device or server 308 and/or storage device 310 and/or data source 312 may be present on communications network 300 with any other network components that are desired to provide community management capabilities and/or cellular telecommunication services. Network device or server 308 and/or storage device 310 and/or data source 312 may communicate with carrier network 326 through data links 328 and 330, which may be data links such as the Internet, a secure LAN, WAN, or other network. Carrier network 326 controls messages (generally being data packets) sent to a mobile switching center (MSC) 332. Further, carrier network 326 communicates with MSC 332 by the network 330, such as the Internet, and/or POTS (plain old telephone service). For example, in network 330, a network or Internet portion transfers data and the POTS portion transfers voice information. MSC 332 may be connected to multiple base stations (BTS) 334 by another network 336, such as a data network and/or Internet portion for data transfer and a POTS portion for voice information. BTS 334 ultimately broadcasts messages wirelessly to the wireless communication devices 302, for example using predetermined voice and/or data packet services, such as Code Division Multiple Access (CDMA) and short messaging service (SMS), respectively, or any other over-the-air methods. Thus, communication network 300, in combination with system 100 (FIG. 1), allow for the discovery, creation and management of electronic or on-line user media access based on relationships discovered between data objects in a tuple space.

It should be noted that FIG. 5 is a representative diagram that more fully illustrates the components of a wireless communication network and the interrelation of the elements of one aspect of the present system. Communications network 300 is merely exemplary and can include any system whereby remote modules, such as wireless communication devices 302, communicate over-the-air between and among each other and/or between and among other components of a wireless and/or wired network, including, without limitation, wireless network carriers, and/or servers.

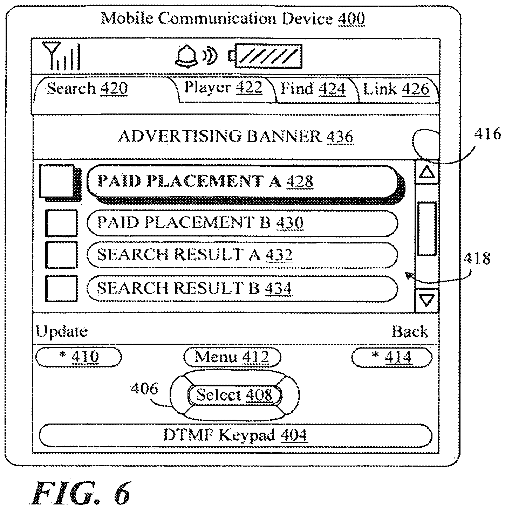

In FIG. 6, an illustrative mobile communication device 400 can serve as client device for remotely accessing and controlling interface, search and rating services via a graphical user interface (GUI) 402, which can include physical controls such as dial tone multi-function (DTMF) keypad 404, with four cursor keys 406 and select button 408, and left, middle and right menu buttons 410, 412, and 414. The GUI 402 can include a display 416 as depicted. Alternatively, a display with touch screen capability can also be used to provide soft input controls (not shown). The display 416 can depict a dynamic index 418 organized under a hierarchy of tabs of a search tab 420, player 422 tab, a find (local) tab 424 and a links tab 426. The index 418 can include a ranking of paid placements A and B entries 428 and 430 followed by nonpaid search results A and B entries 432 and 434. An advertising banner 436, that can be interactive, is advantageously selected to correspond to media purchase opportunities or collateral services related to a listing being depicted.

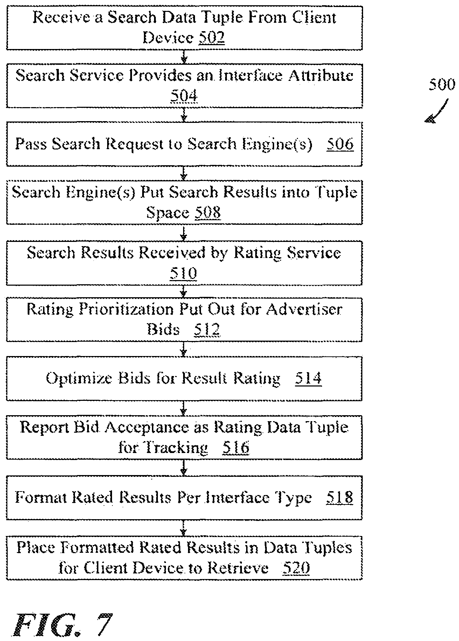

In FIG. 7, an illustrative methodology 500 for interfacing, searching and rating services begins in block 502 with a search data tuple from a client device being received in tuple space. In block 504, a search service provides an interface attribute that allows the client device to interact with services in the tuple space. In block 506, a search request is passed from the service tuple to one or more search engines, which places search result data tuples into tuple space in block 508. A rating service receives the search results in block 510 and forwards the results for bid to advertisers in block 512. The bids are received and optimized (e.g., revenue maximization by a greedy algorithm, etc.) in block 514. Acceptance of bids can be reported as a rating data tuple for tracking in block 516 in order to secure the revenue. In block 518, the rated results are formatted per the interface type and placed in tuple space in block 520 for the client device to retrieve.

The various illustrative logics, logical blocks, modules, and circuits described in connection with the aspects disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but, in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration. Additionally, at least one processor may comprise one or more modules operable to perform one or more of the steps and/or actions described above.

Further, the steps and/or actions of a method or algorithm described in connection with the aspects disclosed herein may be embodied directly in hardware, in a software module executed by a processor, or in a combination of the two. A software module may reside in RAM memory, flash memory, ROM memory, EPROM memory, EEPROM memory, registers, a hard disk, a removable disk, a CD-ROM, or any other form of storage medium known in the art. An exemplary storage medium may be coupled to the processor, such that the processor can read information from, and write information to, the storage medium. In the alternative, the storage medium may be integral to the processor. Further, in some aspects, the processor and the storage medium may reside in an ASIC. Additionally, the ASIC may reside in a user terminal. In the alternative, the processor and the storage medium may reside as discrete components in a user terminal. Additionally, in some aspects, the steps and/or actions of a method or algorithm may reside as one or any combination or set of codes and/or instructions on a machine readable medium and/or computer readable medium, which may be incorporated into a computer program product.

While the foregoing disclosure discusses illustrative aspects and/or versions, it should be noted that various changes and modifications could be made herein without departing from the scope of the described aspects and/or aspects as defined by the appended claims. Furthermore, although elements of the described aspects and/or aspects may be described or claimed in the singular, the plural is contemplated unless limitation to the singular is explicitly stated. Additionally, all or a portion of any aspect and/or aspect may be utilized with all or a portion of any other aspect and/or aspect, unless stated otherwise.

In view of the exemplary systems described supra, methodologies that may be implemented in accordance with the disclosed subject matter have been described with reference to several flow diagrams. While for purposes of simplicity of explanation, the methodologies are shown and described as a series of blocks, it is to be understood and appreciated that the claimed subject matter is not limited by the order of the blocks, as some blocks may occur in different orders and/or concurrently with other blocks from what is depicted and described herein. Moreover, not all illustrated blocks may be required to implement the methodologies described herein. Additionally, it should be further appreciated that the methodologies disclosed herein are capable of being stored on an article of manufacture to facilitate transporting and transferring such methodologies to computers. The term article of manufacture, as used herein, is intended to encompass a computer program accessible from any computer-readable device, carrier, or media.

It should be appreciated that any patent, publication, or other disclosure material, in whole or in part, that is said to be incorporated by reference herein is incorporated herein only to the extent that the incorporated material does not conflict with existing definitions, statements, or other disclosure material set forth in this disclosure. As such, and to the extent necessary, the disclosure as explicitly set forth herein supersedes any conflicting material incorporated herein by reference. Any material, or portion thereof, that is said to be incorporated by reference herein, but which conflicts with existing definitions, statements, or other disclosure material set forth herein, will only be incorporated to the extent that no conflict arises between that incorporated material and the existing disclosure material.

## Claims

1. A method of providing services to a population of client devices (102), **characterised by**:
receiving a data tuple (114) within a tuple space (104), wherein the data tuple (114) comprises a data attribute (136) representing a predetermined configuration of the client device (102) and a service request attribute;
monitoring the data tuple (114) with a service tuple (106) located within the tuple space (104), wherein the service tuplc (106) comprises a plurality of service interface objects (126, 128, 130) associated with a respective client device configuration and a service request attribute; and
providing a service interface object (126, 128, 130) from the service tuple (106) to the data tuple (114) for execution on the client device (102) to access a service associated with the service tuple (106).

2. The method of claim 1, further comprising:
performing the requested service associated with the service request attribute; and
creating and storing within the tuple space (104), by the service tuplc (106), a service result tuple formatted in accordance with the service interface object (126, 128, 130) for receipt by the client device (102).

3. The method of claim 1, further comprising receiving the data tuple (114) from the client device (102) via a cellular telephone network (304).

4. The method of claim 1, further comprising registering the client device (102) to access the tuple space (104).

5. The method of claim 1, further comprising performing the requested service associated with the service request attribute by performing a search.

6. The method of claim 1, further comprising placing the service interface object (126, 128, 130) in a tuple space (104) that is executable by the client device (102) within a virtual machine.

7. A method of accessing services on a distributed network via a client device (102), **characterised by**:
sending a data tuple (114) to a tuple space (104) to locate a service, wherein the data tuple (114) comprises a data attribute (136) representing a predetermined configuration of the client device (102) and a service request attribute, the tuple space monitored by a service tuple (106) that comprises a plurality of service interface objects (126, 128, 130) associated with a respective client device configuration and a service request attribute; and
receiving a service interface object (126, 128, 130) from the service tuple (106) via the data tuple for execution on the client device (102) to access a service associated with the service tuple (106).

8. The method of claim 7, further comprising:
sending the data tuple (114) for causing the service tuple (106) to perform the requested service associated with the service request attribute, and to create and store a service result tuple formatted in accordance with the service interface object (126, 128, 130) for receipt by the client device (102).

9. The method of claim 7, further comprising sending the data tuple (114) from the client device (102) via a cellular telephone network (304).

10. The method of claim 7, further comprising sending the data tuple (114) for registering the client device (102) to access the tuple space (104).

11. The method of claim 7, further comprising sending the data tuple (114) for performing a search within the tuple space (104).

12. The method of claim 7, further comprising receiving the service interface object from the tuple space (104) that is executable by the client device (102) within a virtual machine.

13. A computer program product for accessing services on a distributed network via a client device, the computer program product comprising a computer-readable medium, the computer-readable medium comprising at least one instruction for causing a computer to perform a method in accordance with any of dire preceding claims.

14. An apparatus comprising means for performing a method in accordance with any of claims 1 to 12.

15. An apparatus in accordance with claim 14 as dependent on any of claims 1 to 6, the apparatus comprising:
a tuple space (104) for receiving the data tuple (114);
a service tuple (106) for monitoring the data tuple (114); and
a service interface object (126, 128, 130).

## Patentansprüche

1. Ein Verfahren zum Bereitstellen von Diensten für eine Population von Client-Geräten (102), **gekennzeichnet durch**:
Empfangen eines Datentupels (114) in einem Tupelraum (104), wobei das Datentupel (114) ein Datenattribut (136), das eine vorbestimmte Konfiguration des Client-Geräts (102) darstellt, und ein Serviceanfrageattribut aufweist,
Überwachen des Datentupels (114) mit einem Diensttupel (106), das in dem Tupelraum (104) angeordnet ist, wobei das Diensttupel (106) eine Vielzahl von Dienstschnittstellenobjekten (126, 128, 130), die mit einer entsprechenden Client-Gerät-Konfiguration assoziiert sind, und ein Dienstanfrageattribut aufweist, und
Vorsehen eines Dienstschnittstellenobjekts (126, 128, 130) von dem Diensttupel (106) zu dem Datentupel (114) für die Ausführung auf dem Client-Gerät (102) zum Zugreifen auf einen mit dem Diensttupel (106) assoziierten Dienst.

2. Verfahren nach Anspruch 1, das weiterhin aufweist:
Durchführen des angeforderten Dienstes, der mit dem Dienstanfrageattribut assoziiert ist, und
Erstellen und Speichern in dem Tupelraum (104) durch den Diensttupel (106) eines Dienstergebnistupels, das in Übereinstimmung mit dem Dienstschnittstellenobjekt (126, 128, 130) formatiert ist, für den Empfang durch das Client-Gerät (102).

3. Verfahren nach Anspruch 1, das weiterhin das Empfangen des Datentupels (114) von dem Client-Gerät (102) über ein Mobiltelefonnetz (304) aufweist.

4. Verfahren nach Anspruch 1, das weiterhin das Registrieren des Client-Geräts (102) zum Zugreifen auf den Tupelraum (104) aufweist.

5. Verfahren nach Anspruch 1, das weiterhin das Durchführen des angefragten Dienstes, der mit dem Dienstanfrageattribut assoziiert ist, durch das Durchführen einer Suche aufweist.

6. Verfahren nach Anspruch 1, das weiterhin das Platzieren des Dienstschnittstellenobjekts (126, 128, 130) in einem Tupelraum (104), der durch das Client-Gerät (102) in einer virtuellen Maschine ausführbar ist, aufweist.

7. Ein Verfahren zum Zugreifen auf Dienste in einem verteilten Netzwerk über ein Client-Gerät (102), **gekennzeichnet durch**:
Senden eines Datentupels (114) zu einem Tupelraum (104) zum Lokalisieren eines Dienstes, wobei das Datentupel (114) ein Datenattribut (136), das eine vorbestimmte Konfiguration des Client-Geräts (102) darstellt, und ein Dienstanfrageattribut aufweist, wobei der Tupelraum **durch** ein Diensttupel (106) überwacht wird, das eine Vielzahl von Dienstschnittstellenobjekten (126, 128, 130), die mit einer entsprechenden Client-Gerät-Konfiguration assoziiert sind, und ein Dienstanfrageattribut aufweist, und
Empfangen eines Dienstschnittstellenobjekts (126, 128, 130) von dem Diensttupel (106) über das Datentupel für die Ausführung auf dem Client-Gerät (102) zum Zugreifen auf einen mit dem Diensttupel (106) assoziierten Dienst.

8. Verfahren nach Anspruch 7, das weiterhin aufweist:
Senden des Datentupels (114), um zu veranlassen, dass das Diensttupel (106) den mit dem Dienstanfrageattribut assoziierten angefragten Dienst durchführt und ein Dienstergebnistupel, das in Übereinstimmung mit dem Dienstschnittstellenobjekt (126, 128, 130) formatiert ist, für den Empfang durch das Client-Gerät (102) erstellt und speichert.

9. Verfahren nach Anspruch 7, das weiterhin das Senden des Datentupels (114) von dem Client-Gerät (102) über ein Mobiltelefonnetz (304) aufweist.

10. Verfahren nach Anspruch 7, das weiterhin das Senden des Datentupels (114) für das Registrieren des Client-Geräts (102) zum Zugreifen auf den Tupelraum (104) aufweist.

11. Verfahren nach Anspruch 7, das weiterhin das Senden des Datentupels (114) für das Durchführen einer Suche in dem Tupelraum (104) aufweist.

12. Verfahren nach Anspruch 7, das weiterhin das Empfangen des Dienstschnittstellenobjekts von dem Tupelraum (104), der durch das Client-Gerät (102) in einer virtuellen Maschine ausführbar ist, aufweist.

13. Ein Computerprogrammprodukt zum Zugreifen auf Dienste in einem verteilten Netzwerk über ein Client-Gerät, wobei das Computerprogrammprodukt ein computerlesbares Medium aufweist, wobei das computerlesbare Medium wenigstens einen Befehl aufweist, um einen Computer dazu zu veranlassen, ein Verfahren gemäß einem der vorstehenden Ansprüche auszuführen.

14. Eine Vorrichtung, die Mittel zum Ausführen eines Verfahrens nach einem der Ansprüche 1 bis 12 aufweist.

15. Vorrichtung nach Anspruch 14 und in Abhängigkeit von einem der Ansprüche 1 bis 6, wobei die Vorrichtung aufweist:
einen Tupelraum (104) zum Empfangen des Datentupels (114),
ein Diensttupel (106) zum Überwachen des Datentupels (114), und
ein Dienstschnittstellenobjekt (126, 128, 130).

## Revendications

1. Procédé de fourniture de services à une population d'appareils clients (102), **caractérisé par** :
la réception d'un uplet de données (114) dans un espace d'uplets (104), dans laquelle l'uplet de données (114) comprend un attribut de données (136) représentant une configuration prédéterminée de l'appareil client (102) et un attribut de demande de service ;
la surveillance de l'uplet de données (114) par un uplet de service (106) situé dans l'espace d'uplets (104), dans laquelle l'uplet de service (106) comprend une pluralité d'objets d'interface de service (126, 128, 130) associés à une configuration d'appareil client respective et à un attribut de demande de service ; et
la fourniture d'un objet d'interface de service (126, 128, 130) de l'uplet de service (106) à l'uplet de données (114), pour être exécuté sur l'appareil client (102) pour accéder à un service associé à l'uplet de service (106).

2. Procédé selon la revendication 1, comprenant en outre :
l'exécution du service associé à l'attribut de demande de service ; et
la création et le stockage dans l'espace d'uplets (104), par l'uplet de service (106), d'un uplet de résultat de service formaté en fonction de l'objet d'interface de service (126, 128, 130) à destination de l'appareil client (102).

3. Procédé selon la revendication 1, comprenant en outre la réception de l'uplet de données (114) provenant de l'appareil client (102) via un réseau de téléphonie cellulaire (304).

4. Procédé selon la revendication 1, comprenant en outre l'enregistrement de l'appareil client (102) pour accéder à l'espace d'uplets (104).

5. Procédé selon la revendication 1, comprenant en outre l'exécution du service demandé associé à l'attribut de demande de service en effectuant une recherche.

6. Procédé selon la revendication 1, comprenant en outre l'introduction de l'objet d'interface de service (126, 128, 130) dans un espace d'uplets (104) qui est exécutable par l'appareil client (102) dans une machine virtuelle.

7. Procédé d'accès à des services sur un réseau distribué via un appareil client (102), **caractérisé par** :
l'envoi d'un uplet de données (114) à un espace d'uplets (104) pour localiser un service, dans lequel l'uplet de données (114) comprend un attribut de données (136) représentant une configuration prédéterminée de l'appareil client (102) et un attribut de demande de service, l'espace d'uplets étant surveillé par un uplet de service (106) qui comprend une pluralité d'objets d'interface de service (126, 128, 130) associés à une configuration d'appareil client respective et à un attribut de demande de service ; et
la réception d'un objet d'interface de service (126, 128, 130) provenant de l'uplet de service (106) via l'uplet de données pour être exécuté sur l'appareil client (102) pour accéder à un service associé à l'uplet de service (106).

8. Procédé selon la revendication 7, comprenant en outre :
l'envoi de l'uplet de données (114) pour faire exécuter par l'uplet de service (106) le service demandé associé à l'attribut de demande de service, et pour lui faire créer et stocker un uplet de résultat de service formaté en fonction de l'objet d'interface de service (126, 128, 130) à destination de l'appareil client (102).

9. Procédé selon la revendication 7, comprenant en outre l'envoi de l'uplet de données (114) depuis l'appareil client (102) via un réseau de téléphonie cellulaire (304).

10. Procédé selon la revendication 7, comprenant en outre l'envoi de l'uplet de données (114) pour l'enregistrement de l'appareil client (102) pour accéder à l'espace d'uplets (104).

11. Procédé selon la revendication 7, comprenant en outre l'envoi de l'uplet de données (114) pour effectuer une recherche dans l'espace d'uplets (104).

12. Procédé selon la revendication 7, comprenant en outre la réception de l'objet d'interface de service provenant de l'espace d'uplets (104) qui est exécutable par l'appareil client (102) dans une machine virtuelle.

13. Produit de programme d'ordinateur permettant d'accéder à des services sur un réseau distribué via un appareil client, le produit de programme d'ordinateur comprenant un support lisible par un ordinateur, le support lisible par un ordinateur comprenant au moins une instruction destinée à faire exécuter par un ordinateur un procédé selon l'une quelconque des revendications précédentes.

14. Dispositif comprenant un moyen pour exécuter un procédé selon l'une quelconque des revendications 1 à 12.

15. Dispositif selon la revendication 14 quand elle dépend de l'une quelconque des revendications 1 à 6, le dispositif comprenant :
un espace d'uplets (104) pour recevoir l'uplet de données (114) ;
un uplet de service (106) pour surveiller l'uplet de données (114) ; et
un objet d'interface de service (126, 128, 130).
